# FASCICULE DE BREVET EUROPEEN

(11) **EP 1 451 972 B1**
(45) Date de publication et mention de la délivrance du brevet: **06.03.2013**
(21) Numéro de dépôt: 02783439.9
(22) Date de dépôt: 27.11.2002
(51) Int. Cl.: H04L 29/06

(54) **PROCEDE DE CONSTITUTION D'UN RESEAU DOMOTIQUE**
VERFAHREN ZUR BILDUNG EINES HEIMNETZES
METHOD FOR CONSTITUTING A HOME AUTOMATION NETWORK

(30) Priorité: 05.12.2001 FR 0115880
(43) Date de publication de la demande: 01.09.2004
(73) Titulaire: Somfy SAS, 74300 Cluses (FR)
(72) Inventeur: AUTRET, Capucine, F-74460 Marnaz (FR)
(74) Mandataire: Bugnion Genève
(86) Numéro de dépôt international: PCT/IB2002/004973
(87) Numéro de publication internationale: WO 2003/049375

(56) Documents cités:
- US-A- 5 420 572
- US-A- 5 844 888
- SHEPHERD R: "BLUETOOTH WIRELESS TECHNOLOGY IN THE HOME" ELECTRONICS AND COMMUNICATION ENGINEERING JOURNAL, INSTITUTION OF ELECTRICAL ENGINEERS, LONDON, GB, vol. 5, no. 13, octobre 2001 (2001-10), pages 195-203, XP001073055 ISSN: 0954-0695

## Description

L'invention se rapporte au domaine des réseaux du type domotique et concerne plus particulièrement un procédé de constitution d'un réseau élémentaire ou d'un réseau comprenant une association de réseaux élémentaires, ledit réseau permettant la communication entre des produits destinés à la gestion de la sécurité ou du confort au sein d'un bâtiment, et particulièrement dans l'habitat, lorsque ces produits communiquent par un lien non filaire, et notamment par ondes radioélectriques.

On connaît déjà, dans domaine de la domotique, ou de la gestion technique des bâtiments, des installations associant différents composants tels que des stores, des volets roulants, des portails et tous autres dispositifs tels que des climatiseurs ou des moyens de chauffage ou d'éclairage. Les utilisateurs, qui sont de plus en plus exigeants, ont fait progresser la technique de gestion des différents composants et les constructeurs, afin de satisfaire la clientèle, ont mis des installations sous forme de réseau domotique comprenant des moyens de gestion.

Les problèmes restant à résoudre sont ceux dus à l'installation des différents composants qui sont actionnés par des actionneurs, commandés par des émetteurs, des capteurs ou tous autres dispositifs de commande. En effet, l'installateur doit construire le réseau, bien souvent, sans connaissances particulières, et de plus il doit faire reconnaître de nouveaux équipements et constituer de nouveaux groupes de produits dans une installation existante, ceci de la manière la plus simple, sans pour autant connaître des techniques sophistiquées de mise en oeuvre.

On connaît déjà des installations selon lesquelles la mise en relation fonctionnelle permet à deux éléments spécifiques du réseau de partager, de manière temporaire ou permanente, un lien de communication. Ce lien permet, par exemple, à un premier élément, d'obéir aux ordres émis par un deuxième élément. La liaison étant dite ici, "temporaire", quand le lien peut être remis en cause lors d'une reconfiguration volontaire du réseau, laquelle nécessite une intervention d'un homme du métier ou d'un utilisateur averti.

Il existe plusieurs manières, connues de l'homme du métier, de partager un tel lien.

Pour les versions filaires, développées au travers de réseaux propriétaires, puis partagés, une phase de configuration permet à l'installateur d'effectuer les appariements et surtout les groupages désirés. Dans le brevet américain US 5,544,037, il est décrit un tel mode de définition d'adresses de groupe dans le domaine de l'éclairage. Dans le cas de réseaux partagés, de type Echelon (marque déposée), des procédés plus intuitifs de mise en relation sont proposés. De tels procédés ont été divulgués notamment par le brevet américain US 4,918,690, et les brevets européens EP 0 838 740 et EP 0 574 636.

On connaît aussi par les brevets américains US 4,689,786, US 4,847,834, et le brevet européen EP 0 629 934 des procédés selon lesquels, pour simplifier la mise en relation, l'identité physique de chaque composant du réseau fait en général place à une identité logique, par exemple, un numéro d'ordre incrémenté lors de chaque insertion de composant dans le réseau local (LAN).

Concernant la mise en relation de systèmes communiquant par ondes radioélectriques, une difficulté supplémentaire apparaît du fait qu'il n'existe pas de lien filaire permettant de distinguer nettement ce qui relève du réseau, et ce qui relève de l'extérieur, ce qui impose d'augmenter le niveau de sécurité.

Dans les cas les plus simples tel que divulgués par les brevets US 4,385,296 et US 4,750,118, une procédure d'apprentissage permet au récepteur d'un élément de mettre en mémoire un code d'identification contenu dans l'émetteur de l'autre élément, ou réciproquement.

Il est également décrit dans l'art antérieur des procédés de clonage, permettant de reproduire d'un émetteur à l'autre un même code ou une pluralité de codes d'identification déjà connu(s) d'un ou plusieurs récepteurs. Cette reproduction peut avoir lieu directement entre lesdits émetteurs à l'aide d'une liaison filaire temporaire tel que selon le brevet européen EP 0 533 623, et le brevet américain US 6,020,829, ou encore directement entre lesdits émetteurs par ondes radioélectriques, l'un des émetteurs étant en fait bidirectionnel tel que divulgué dans le document US 4 988 992.

Le code d'identification peut être constitué d'une adresse physique ou d'une adresse logique et peut être crypté pendant la transmission d'apprentissage. Les procédés connus de « rolling code » ou encore de « code hopping » permettent d'éviter de transmettre directement l'image du code d'identification. Dans les liaisons mieux sécurisées, le code d'identification est lui-même totalement variable et c'est simplement un « germe » utilisé par un algorithme du récepteur qui permet à ce dernier de prévoir la ou les prochaines valeurs du code d'identification. Seul le germe est alors transmis pendant la procédure d'apprentissage, comme cela est décrit dans le brevet US 6,191,701.

Dans les spécifications du réseau type Bluetooth (marque déposée), l'établissement d'un lien est réalisé par la mémorisation d'une clé commune, créée et échangée pendant une procédure d'appariement entre deux éléments. Comme dans le cas des mises en relation des réseaux filaires de type Echelon (marque déposée), l'installateur désigne, par appui sur un bouton spécifique, chaque élément destiné à être lié.

Plus éloigné des réseaux, mais partageant la problématique d'authentification, le domaine des serrures électroniques a donné lieu à des réalisations dans lesquelles l'apprentissage d'un nouvel élément de commande (clé-utilisateur) par un élément actionneur (serrure) est réalisé sous contrôle d'un troisième élément (clé-maître). Ce troisième élément n'est pas lui-même authentifié au cours d'une procédure d'apprentissage mais par un code pré-enregistré dans l'élément actionneur au cours de sa fabrication tel que décrit par la demande internationale de brevet publiée sous le numéro WO 80/02711.

On trouve aussi, notamment dans le brevet français 2 761183, dans le domaine des commandes de portes à distance, une forme d'authentification, lors d'une mise en relation fonctionnelle, réalisée par un émetteur lui même préalablement enregistré au cours d'une procédure d'apprentissage. Mais, ce brevet, déposé par la demanderesse, ne prévoit pas que cette étape puisse être mise à profit pour communiquer, de manière bidirectionnelle, les informations nécessaires à la réalisation progressive d'un réseau.

On connaît encore du brevet US 5,844,888, un procédé de réalisation d'un réseau composé de cellules élémentaires identiques communiquant de manière bidirectionnelle entre elles. Chaque cellule reçoit un identifiant lors de sa fabrication. Un dispositif de groupement des cellules permet d'accéder à l'identifiant propre à chaque cellule et de grouper les cellules en leur affectant un identifiant de groupe. Une fois que le réseau est installé, les cellules peuvent se grouper elles-mêmes. Ce groupement est basé sur le partage, entre les cellules, d'un identifiant de groupe. L'envoi d'identifiant permet de déterminer quelles cellules sont des émetteurs, quelles cellules sont des récepteurs et quelles cellules sont des relais de transmission.

On connaît du brevet US 5,420,572, un dispositif de configuration d'un réseau de communication. Ce dispositif comprend des moyens lui permettant de se raccorder temporairement aux éléments constituant le réseau de communication afin d'échanger des informations permettant de structurer celui-ci.

L'ensemble de l'art antérieur est donc consacré :
- soit à des dispositifs destinés à fonctionner de manière univoque (plusieurs émetteurs, un récepteur) même dans le cas d'éventuelles liaisons bidirectionnelles (alors simplement destinées à la transmission d'accusé de réception par le récepteur vers les émetteurs),
- soit à des dispositifs communicant en réseau, et placés sur un plan d'égalité, sans structuration hiérarchique dudit réseau,
- soit à des dispositifs communicant en réseau, de manière structurée, après au moins une phase de configuration dans laquelle l'installateur (ou l'utilisateur compétent) a procédé à la désignation de tous les liens et groupes.

L'art antérieur ne résout donc pas le problème de la cohabitation dans un réseau domotique de dispositifs aussi bien unidirectionnels que bidirectionnels.

L'art antérieur ne permet pas de procéder à la mise en place d'une installation réseau selon des modalités strictement identiques, pour l'installateur, à celles utilisées dans le cas des dispositifs univoques auxquels il est habitué.

L'art antérieur décrit, dans le brevet de la demanderesse publié sous le numéro 2 761183, un type de mise en relation fonctionnelle de deux éléments, effectuée sous contrôle d'un troisième élément, lui même préalablement authentifié auprès d'un des éléments lors d'une opération d'apprentissage, mais sans que ces éléments soient bidirectionnels, et encore moins que cette mise en relation occasionne le transfert par un premier élément bidirectionnel vers un deuxième élément bidirectionnel d'au moins une information structurant le réseau.

L'art antérieur ne prévoit pas que :
- l'information structurant de manière hiérarchique le réseau soit un nom de groupe,
- l'information structurant de manière hiérarchique le réseau soit l'identité des liens déjà établis avec le premier élément bidirectionnel.

Ainsi selon l'invention, le procédé de constitution d'un réseau domotique, comprenant des éléments bidirectionnels tels que des actionneurs, des éléments au moins unidirectionnels de commande (émetteurs, capteurs), des éléments bidirectionnels de commande, est du type qui consiste à mettre en relation fonctionnelle durable au moins deux éléments, et est caractérisé en ce que la mise en relation fonctionnelle durable occasionne au moins un transfert d'un élément bidirectionnel vers un autre élément bidirectionnel d'au moins une information structurant le réseau et créant une relation hiérarchique entre ces deux éléments.

Selon une caractéristique complémentaire, l'information créant une relation hiérarchique entre ces deux éléments comprend un nom de groupe.

Selon une autre caractéristique complémentaire, l'information créant une relation hiérarchique entre ces deux éléments comprend l'identité des liens déjà établis avec l'élément émettant l'information.

Ajoutons que le procédé selon l'invention peut être tel que la mise en relation fonctionnelle durable entre deux éléments bidirectionnels se fait sous le contrôle d'un troisième élément, lui-même préalablement authentifié auprès d'un des éléments lors d'une opération d'apprentissage. Ceci est particulièrement intéressant lorsque l'un des éléments bidirectionnels est difficilement accessible.

Selon l'un des modes de réalisation, la mise en relation fonctionnelle d'un élément bidirectionnel de commande avec un élément bidirectionnel est effectuée sous contrôle d'un élément de commande au moins unidirectionnel.

Selon d'autres modes de réalisation,
- la mise en relation fonctionnelle d'un élément de commande au moins unidirectionnel avec un élément bidirectionnel est effectuée sous contrôle d'un élément bidirectionnel de commande,
- la mise en relation fonctionnelle de deux éléments bidirectionnels de commande de même niveau hiérarchique est assurée par la mise en relation de chacun des éléments bidirectionnels de commande avec un élément de commande de niveau hiérarchique supérieur,
- la mise en relation fonctionnelle de deux éléments bidirectionnels est assurée par la mise en relation fonctionnelle successive de chacun d'eux avec un même élément bidirectionnel de commande,
- lors d'une mise en relation fonctionnelle d'un élément bidirectionnel de commande avec un autre élément, celui-ci communique audit élément bidirectionnel de commande l'ensemble des identifiants relatifs aux éléments avec lesquels il est déjà en relation,
- dans le cas d'une mise en relation entre deux éléments de commande de niveau hiérarchique différent, la transmission d'informations sur les relations pré-établies a lieu de l'élément de niveau inférieur vers l'élément de niveau supérieur,
- lors d'une mise en relation fonctionnelle d'un élément bidirectionnel de commande avec un autre élément, est échangé un nom de groupe devenant commun à tous les éléments de niveau inférieur, mis en relation avec ledit élément bidirectionnel de commande,
- la transmission du nom de groupe peut être codée selon un algorithme de cryptage : par exemple, le nom de groupe n'est pas directement transmis en tant que tel mais sous forme d'un « germe » permettant la reconstitution du nom de groupe par chaque élément contenant un même polynôme de décryptage.

L'invention permet la cohabitation dans un même réseau domotique d'éléments de commande ou autres unidirectionnels avec des éléments bidirectionnels.

Elle permet, entre autres, de construire le réseau de manière progressive, dans l'espace et dans le temps, en sécurisant cette construction, notamment vis-à-vis de l'intrusion d'éléments étrangers et/ou de l'adressage involontaire d'éléments n'appartenant pas au réseau.

L'invention rend notamment possible de ne rien changer aux façons de faire de l'installateur, quand il associe d'abord et individuellement les points de commande simples aux actionneurs à commander, avant de procéder à l'association du ou des points de commande générale aux dits actionneurs, et permet un mode d'appariement plus direct quand l'installateur dispose d'un ensemble de supervision.

Un avantage important de l'invention est également, de permettre la constitution d'un réseau contenant au moins plusieurs éléments sur lesquels aucune action physique directe de l'installateur n'est possible afin de désigner explicitement le ou les produits à mettre en relation.

Au travers de la description d'une réalisation préférée, permettant la constitution progressive et implicite du réseau, l'invention sera plus facilement comprise.

D'autres caractéristiques et avantages de l'invention se dégageront de la description qui va suivre en regard du dessin annexé.

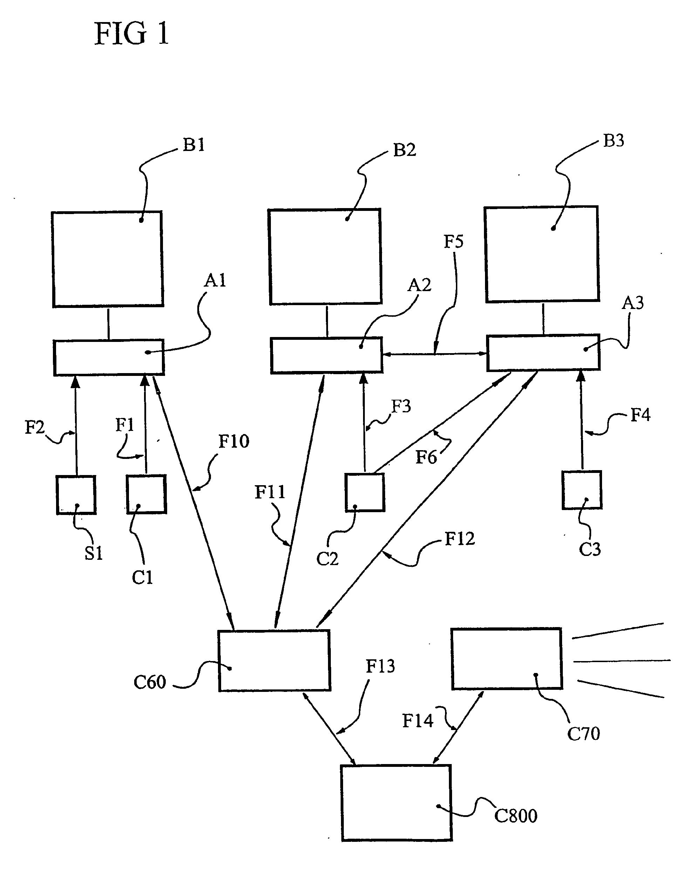

Le réseau de communication auquel s'applique l'invention et qui est illustré à titre d'exemple à la figure 1 comprend une combinaison partielle ou totale d'éléments bidirectionnels associés à des actionneurs et/ ou à des capteurs, d'éléments unidirectionnels associés à des capteurs, d'éléments unidirectionnels associés à des commandes à distance, d'éléments bidirectionnels associés à des commandes à distance auxquels est attribué un premier niveau hiérarchique et, enfin, d'éléments bidirectionnels associés à des fonctions de commande à distance et de supervision auxquels est associé un niveau hiérarchique supérieur. Le niveau hiérarchique d'un élément bidirectionnel est préférentiellement défini par le fabriquant et il est mentionné dans la trame de communication.

La communication physique entre éléments du réseau fonctionne préférentiellement selon un mode multi-maître / multi-esclave.

La figure 1 représente un exemple de réseau comprenant un ensemble d'actionneurs (A1, A2, A3), des commandes (C1, C3), un capteur (S1), placé dans un même bâtiment. Les actionneurs (A1, A2, A3) sont commandés par radio. Ils peuvent eux-mêmes intégrer des capteurs spécifiques, par exemple de position, de détection d'effort ou d'obstacle. Pour simplifier, on les désigne cependant par le seul terme « actionneurs ». Placés à l'intérieur des produits qu'ils entraînent, les actionneurs ne sont pas directement accessibles, ne serait-ce que par l'intermédiaire d'un bouton, ou sont d'un accès tout simplement difficile.

L'installation des produits de la figure 1 a été réalisée, par exemple, en plusieurs phases.

Dans une première phase d'installation, un store de terrasse (B1) intégrant un premier actionneur bidirectionnel (A1) a été mis en place, de même qu'un premier capteur météorologique vent-soleil unidirectionnel (S1), destiné au pilotage automatique de l'actionneur (A1), qui est prévu pour être également commandé directement par l'utilisateur, à l'aide d'une première commande radio unidirectionnelle (C1).

L'installateur aura d'abord à procéder à l'appariement de la première commande radio (C1) avec le premier actionneur (A1) d'une manière classique, en utilisant, par exemple, le bouton dit de programmation disposé sur la commande, et une propriété des actionneurs non encore appariés (vierges) d'accepter toute commande d'appariement, comme décrit dans l'art antérieur. Ce premier appariement est représenté à la figure 1 par la flèche (F1).

Par la suite, le premier actionneur (A1) n'accepte de nouvelle commande d'appariement que si celle-ci provient d'une commande qu'il connaît déjà. Par exemple, l'appariement du capteur (S1) avec le premier actionneur (A1) sera fait par l'installateur sous contrôle de la première commande (C1). En appuyant sur le bouton de programmation de la première commande (C1), l'installateur transmet par cette première commande (C1) au premier actionneur (A1) une demande d'apprentissage, validant ainsi l'acquisition par ledit premier actionneur (A1) du prochain code transmis. L'installateur appuie alors sur la commande de programmation du premier capteur (S1). L'identification du premier capteur (S1) est alors enregistrée par le premier actionneur (A1). Cette méthode permet d'enregistrer plusieurs identifiants des différentes commandes dans un même actionneur. Ce deuxième appariement est représenté à la figure 1 par la flèche (F2).

On notera qu'à ce stade, le caractère bidirectionnel du premier actionneur (A1) n'est pas encore exploité.

En poursuivant le même exemple, le bâtiment connaît par la suite une deuxième phase d'installation, avec mise en place de deux volets roulants (B2, B3) intégrant chacun un actionneur (A2, A3), à savoir, un deuxième actionneur bidirectionnel (A2), commandé par une première commande unidirectionnelle (C2) pour le premier volet roulant (B2) et une troisième actionneur bidirectionnel (A3) commandé par une troisième commande unidirectionnelle (C3) pour le deuxième volet roulant (B3). L'appariement de la deuxième commande (C2) avec le deuxième actionneur (A2) et de la troisième commande (C3) avec le troisième actionneur (A3) est réalisé comme précédemment, par des opérations successives représentées à la figure 1 par les flèches (F3) et (F4).

A ce stade, le caractère bidirectionnel des deuxième et troisième actionneurs (A2, A3) n'a toujours pas été exploité.

Cependant, une autre procédure d'appariement est possible pour ces deux actionneurs (A2, A3), qui utilisent un mode de communication préalable (représenté par la flèche (F5)) entre produits non encore appariés (vierges).

Ce mode de communication préalable consiste en ce que les produits vierges nouvellement branchés établissent de manière autonome une relation d'ordre leur permettant de ne pas réagir tous simultanément à une commande de l'installateur, et facilitant ainsi l'appariement individuel des produits. Un tel procédé aurait pu tout aussi bien être utilisé ici en préalable à l'appariement des deuxième et troisième commandes (C2, C3). La communication bidirectionnelle provisoire représentée par la double flèche (F5) établie à cette occasion ne concerne que les seuls produits vierges et ne saurait être assimilée à la constitution de réseau décrite ici, dont le but est d'établir des liens durables entre éléments.

A ce stade de l'installation, il est, par exemple, décidé pour des raisons de commodité que la deuxième commande (C2) puisse également commander le deuxième volet roulant normalement activé par le troisième actionneur (A3). L'installateur doit donc faire que ce troisième actionneur (A3) apprenne à reconnaître les instructions de la deuxième commande (C2). Cette opération, représentée par la flèche (F6), est effectuée sous contrôle de la troisième commande (C3), exactement comme le premier actionneur (A1) avait appris à reconnaître les instructions du premier capteur (S1) sous contrôle de la première commande (C1).

Par la suite, il est décidé d'ajouter à l'installation une première commande générale bidirectionnelle (C60), pour constituer le réseau de l'invention.

Exactement comme il le pratique avec les produits de l'art antérieur, l'installateur va nécessairement devoir faire en sorte que les différents actionneurs apprennent cette nouvelle commande. Ceci est matérialisé par trois opérations successives d'appariement, représentées à la figure 1 par les flèches (F10, F11, F12). Ces opérations sont réalisées respectivement sous le contrôle de la première commande (C1), de la deuxième commande (C2) puis de la troisième commande (C3).

Selon l'invention, cette étape d'appariement est mise à profit pour transmettre l'une au moins des informations suivantes :
- la liste des éléments, déjà connus des actionneurs (A1, A2, A3), à savoir, les commandes (C1, C2, C3) et le capteur (S1).
- un nom de groupe, qui sera commun à tous les éléments appariés à cette commande bidirectionnelle.
D'une façon avantageuse, ce nom de groupe est, par exemple, issu du numéro d'identification de la commande bidirectionnelle et, dans ce cas, il sera toujours transmis depuis cette commande vers les éléments auxquels cette commande est appariée par la suite. Il est néanmoins préférable dans certains cas que le nom de groupe soit au contraire issu du premier actionneur (ou élément) apparié à cette commande bidirectionnelle. Dans ce cas, le nom de groupe sera tout d'abord transmis vers la commande bidirectionnelle lors du premier appariement qui, à son tour, le communiquera aux autres éléments lors des appariements suivants.

Ceci va être illustré à partir de l'installation de la figure 1. Lors de la mise en relation (F10) du premier actionneur (A1) et de la première commande générale (C60), et ce sous couvert de la première commande (C1), le premier actionneur (A1) transmet à ladite première commande générale (C60) les identifiants qu'il connaît, à savoir, la première commande (C1) et le capteur (S1). De même, lors de la mise en relation (F11) entre le deuxième actionneur (A2) et ladite première commande générale (C60), sous couvert de la deuxième commande (C2), le deuxième actionneur (A2) transmet à la première commande générale (C60) l'identifiant qu'il connaît, à savoir, la deuxième commande (C2), et enfin, lors de la mise en relation (F12) du troisième actionneur (A3) avec la première commande générale (C60), sous couvert de la troisième commande (C3), le troisième actionneur (A3) transmet à la première commande générale (C60) les identifiants de la deuxième et de la troisième commandes (C2, C3).

Bien évidemment ces opérations se font dans un ordre quelconque.

Il est proposé de profiter de cette première mise en relation pour transférer simultanément et automatiquement un identifiant commun, servant de nom de groupe au réseau maintenant constitué, implicitement, par ces mises en relation successives. Le nom de groupe (NG1) est avantageusement constitué à partir de l'identifiant de la première commande générale (C60). Tous les actionneurs, à savoir, le premier, le deuxième et le troisième actionneurs (A1, A2, A3) savent alors qu'ils font partie du même groupe (NG1).

Ceci a pour effet :
- de permettre le relayage (répétition, routage) éventuel par tout actionneur bidirectionnel (A1, A2, A3) du réseau NG de tout message capté par l'un des actionneurs, non destinataire dudit message, et pour lequel il constate que le destinataire n'a pas adressé d'accusé de réception. Ce procédé connu par ailleurs, donnant au réseau une « robustesse » significative, permet:
   - un fonctionnement en mode basse activité / basse consommation de l'ensemble des actionneurs, ceux-ci ne poursuivant chaque écoute de trame que si cette dernière a commencé par l'identifiant du réseau,
   - de réagir à un mode d'interrogation collectif ne concernant que les membres du réseau.

A ce titre, il est tout à fait possible d'utiliser l'invention dans une chronologie différente de celle qui vient d'être proposée. Ainsi, lors de chacune des premières mises en relation (F10, F11, F12), seul le nom de groupe NG1 est transmis. Ce ne serait alors que lors d'une succession d'interrogations individuelles, ou mieux, lors d'une interrogation collective, ultérieure(s) réalisée(s) par la première commande générale (C60), que seraient transmis vers cette commande (C60) les identifiants connus de chaque actionneur (A1, A2, A3).

Après cette opération, la première commande générale (C60) dispose donc d'une table, préférentiellement structurée, donnant la topologie du groupe (NG1), suivante :

| NG1- C60 | | |
|---|---|---|
| | A1 | |
| | | C1 |
| | | S1 |
| | A2 | |
| | | C2 |
| | A3 | |
| | | C3 |
| | | C2 |

L'intérêt de faire remonter automatiquement les identifiants connus de chaque actionneur (ou plus généralement de chaque élément bidirectionnel) vers la commande générale (C60) est aisé à comprendre par un seul exemple : on sait que les volets roulants peuvent très efficacement contribuer à la gestion de la lumière ou à protéger l'intérieur contre les surchauffes solaires. Ainsi, l'information donnée par le capteur (S1) initialement rattaché fonctionnellement au seul premier actionneur (A1) devient-elle disponible pour la commande générale (C60), et exploitable si cette dernière contient un programme de gestion solaire, ou encore même directement pour l'ensemble des équipements du groupe (NG1) qui activeraient un tel programme préalablement enregistré ou téléchargé après installation.

En parallèle à l'installation précédente, concernant les produits mobiles du bâtiment, ont peut imaginer avoir à installer d'autres produits radiocommandés utilisant un même protocole, partagé entre plusieurs métiers. Il s'agit, par exemple, de systèmes d'éclairage (B4), ou de chauffage et climatisation (B5), non représentés, équipés d'actionneurs, respectivement, d'un quatrième actionneur (A4) et d'un cinquième actionneur (A5), commandés respectivement par une quatrième commande (C4) et une cinquième commande (C5), voire d'un deuxième capteur (S2), eux aussi non représentés.

Ces autres systèmes sont commandés eux-mêmes par au moins une deuxième commande bidirectionnelle générale (C70). Ces systèmes constituent un autre réseau indépendant (NG2). La table contenue dans la deuxième commande générale (C70) contient, comme précédemment, la liste (structurée) de tous les identifiants du groupe NG2. On supposera par exemple que la deuxième commande générale (C70) contient les identifiants des deux actionneurs, c'est-à-dire du quatrième actionneur (A4) et du cinquième actionneur (A5) eux-mêmes commandés par leur commande correspondantes (C4) et (C5), ainsi que par le deuxième capteur (S2).

Dans une nouvelle phase d'installation, est installée une commande bidirectionnelle supplémentaire (C800) de niveau hiérarchique supérieur aux première et deuxième commandes générales, respectivement (C60, C70). Cette commande générale supplémentaire est, par exemple, une commande centralisée munie de programmes de gestion du confort nécessitant l'interaction de produits de différents métiers.

On remarquera que, cette fois, un appariement direct de la commande supplémentaire générale (C800) à la première commande générale (C60) ou à la deuxième commande générale (C70) est possible, puisque ce type de produit est directement accessible par l'installateur et possède, par exemple, un bouton de désignation ou de mise en apprentissage. L'appariement ne se fait donc plus nécessairement sous contrôle d'un troisième composant préalablement authentifié.

Par contre, chacune de ces opérations d'appariement va donner lieu, selon l'invention, à un transfert d'information.

Par exemple, la commande supplémentaire (C800) transmet à la première commande générale (C60) son nom de groupe (NG3), tandis que cette commande générale (C60) transmet à la commande supplémentaire (C800) son nom de groupe (NG1). De la même façon, entre la commande supplémentaire (C800) et la deuxième commande générale (C70) sont échangés les noms de groupe (NG2 et NG3).

Au cours de la même opération, ou de manière différée, sont transmis également les identifiants inclus dans chaque table.

Ainsi, la table incluse dans la commande supplémentaire (C800) peut-elle apparaître structurée comme suit :

| NG3 - C800 : | | | |
|---|---|---|---|
| | NG1- C60 | | |
| | | A1 | |
| | | | C1 |
| | | | S1 |
| | | A2 | |
| | | | C2 |
| | | A3 | |
| | | | C3 |
| | | | C2 |

| | NG2 - C70 | | |
|---|---|---|---|
| | | A4 | |
| | | | C4 |
| | | A5 | C5 |
| | | | S2 |

La première commande générale (C60) et la deuxième commande générale (C70) savent maintenant appartenir à un même ensemble (NG3), et peuvent éventuellement propager cette information vers les éléments qu'elles contrôlent.

On constate que, bien que la communication entre éléments du réseau se réalise de manière éventuellement quelconque et, par exemple, sous forme multi-maître / multi-esclave, le réseau est structuré fonctionnellement par la façon même dont il a été constitué.

On a compris que, par mise en relation fonctionnelle durable, on entendait que, jusqu'à nouvelle intervention dans l'installation, un premier élément devient apte à émettre des commandes ou des informations vers un deuxième élément apte à les recevoir, les interpréter ou les exécuter.

On ajoutera que plusieurs modes de réalisation, complémentaires ou exclusifs, sont utilisables :
1. La mise en relation fonctionnelle d'une commande bidirectionnelle (C60) avec un actionneur bidirectionnel (A1, A2, A3) est effectuée sous contrôle d'un élément de commande unidirectionnel (C1, C2, C3).
2. La mise en relation fonctionnelle d'un élément de commande au moins unidirectionnel (C1, C2, C3) ou d'un capteur au moins unidirectionnel (S1) avec un élément capteur-actionneur bidirectionnel (A1, A2, A3) est effectuée sous contrôle d'une commande bidirectionnelle (C60).
3. La mise en relation fonctionnelle de deux commandes bidirectionnelles (C60, C70) de même niveau hiérarchique est assurée par la mise en relation de chacune des commandes bidirectionnelles avec une commande de niveau hiérarchique supérieur (C800).
4. La mise en relation fonctionnelle de deux capteur-actionneurs bidirectionnels (A1, A2, A3) est assurée par la mise en relation fonctionnelle successive de chacun d'eux avec une même commande bidirectionnelle (C60).
5. Lors d'une mise en relation fonctionnelle d'une commande bidirectionnelle (C60, C70 ou C800) avec l'un des éléments, celui-ci communique à ladite commande bidirectionnelle l'ensemble des identifiants relatifs aux commandes avec lesquels il est déjà en relation.
6. Dans le cas d'une mise en relation entre deux commandes de niveau hiérarchique différent, la transmission d'informations sur les relations pré-établies a lieu depuis l'élément de niveau inférieur vers l'élément de niveau supérieur.
7. Lors d'une mise en relation fonctionnelle d'une commande bidirectionnelle (C60, C70, ou C800) avec l'un des éléments est échangé un nom de groupe NG devenant commun à tous les éléments de niveau inférieur, mis en relation avec ladite unité de commande bidirectionnelle.
8. La transmission du nom de groupe NG est codée selon un algorithme de cryptage. Par exemple, le nom de groupe n'est pas directement transmis en tant que tel mais sous forme d'un « germe » permettant la reconstitution du nom de groupe par chaque élément contenant un même polynôme de décryptage.

On a vu, dans le réseau donné à titre d'exemple, que la première , la deuxième et la troisième commande (C1, C2, C3) sont des éléments unidirectionnels, mais il pourrait en être autrement, car l'une ou l'autre, voire la totalité des commandes pourrait être du type bidirectionnel, ne serait ce que pour échanger un accusé de réception, par exemple.

La description ne mentionne pas les procédures de mise à jour ultérieures, lors d'un appariement de nouveaux éléments au sein du réseau déjà constitué, ces procédures étant à la portée de l'homme du métier.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Procédé de constitution d'un réseau domotique, comprenant des éléments bidirectionnels tels que des actionneurs (A1, A2, A3), des éléments au moins unidirectionnels de commande (C1, C2, C3, S1), des éléments bidirectionnels de commande (C60, C70, C800), qui consiste à mettre en relation fonctionnelle durable au moins deux éléments, **caractérisé en ce que** la mise en relation fonctionnelle durable occasionne au moins un transfert d'un élément bidirectionnel vers un autre élément bidirectionnel d'au moins une information structurant le réseau et créant une relation hiérarchique entre ces deux éléments.

2. Procédé de constitution d'un réseau domotique, selon la revendication 1, **caractérisé en ce que** l'information créant une relation hiérarchique entre ces deux éléments comprend un nom de groupe (NG1; NG2).

3. Procédé de constitution d'un réseau domotique, selon la revendication 2, **caractérisé en ce que** la transmission du nom de groupe (NG1 ; NG2) est codée selon un algorithme de cryptage.

4. Procédé de constitution d'un réseau domotique, selon la revendication 1, **caractérisé en ce que** l'information créant une relation hiérarchique entre ces deux éléments comprend l'identité des liens déjà établis avec l'élément émettant l'information.

5. Procédé de constitution d'un réseau domotique, selon l'une quelconque des revendications précédentes, **caractérisé en ce que** la mise en relation fonctionnelle durable entre deux éléments bidirectionnels se fait sous le contrôle d'un troisième élément lui même préalablement authentifié auprès d'un des éléments lors d'une opération d'apprentissage.

6. Procédé de constitution d'un réseau domotique, selon l'une quelconque des revendications précédentes, **caractérisé en ce que** la mise en relation fonctionnelle d'un élément bidirectionnel de commande (C60) avec un élément bidirectionnel (A1, A2, A3) est effectuée sous contrôle d'un élément de commande au moins unidirectionnel (C1, C2, C3).

7. Procédé de constitution d'un réseau domotique, selon l'une quelconque des revendications précédentes, **caractérisé en ce que** la mise en relation fonctionnelle d'un élément de commande au moins unidirectionnel (C1, C2, C3, S1) avec un élément bidirectionnel (A1, A2, A3) est effectuée sous contrôle d'un élément bidirectionnel de commande (C60).

8. Procédé de constitution d'un réseau domotique, selon l'une quelconque des revendications précédentes, **caractérisé en ce que** la mise en relation fonctionnelle de deux éléments bidirectionnels de commande (C60, C70) de même niveau hiérarchique, est assuré par la mise en relation de chacun des éléments bidirectionnels de commande avec un élément de commande de niveau hiérarchique supérieur (C800).

9. Procédé de constitution d'un réseau domotique, selon l'une quelconque des revendications précédentes, **caractérisé en ce que** la mise en relation fonctionnelle de deux éléments bidirectionnels (A1, A2, A3) est assurée par la mise en relation fonctionnelle successive de chacun d'eux avec un même élément bidirectionnel de commande (C60).

10. Procédé de constitution d'un réseau domotique, selon l'une quelconque des revendications précédentes, **caractérisé en ce que**, lors d'une mise en relation fonctionnelle d'un élément bidirectionnel de commande (C60, C70 ou C800) avec un autre élément, celui-ci communique audit élément bidirectionnel de commande l'ensemble des identifiants relatifs aux éléments avec lesquels il est déjà en relation.

11. Procédé de constitution d'un réseau domotique, selon l'une quelconque des revendications précédentes, **caractérisé en ce que**, lors d'une mise en relation fonctionnelle entre deux éléments de commande de niveau hiérarchique différent, la transmission d'informations sur les relations pré-établies a lieu de l'élément de niveau inférieur vers l'élément de niveau supérieur.

12. Procédé de constitution d'un réseau domotique, selon l'une quelconque des revendications précédentes, **caractérisé en ce que**, lors d'une mise en relation fonctionnelle d'un élément bidirectionnel de commande (C60, C70, ou C800) avec un autre élément, est échangé un nom de groupe NG devenant commun à tous les éléments de niveau inférieur, mis en relation avec ledit élément bidirectionnel de commande.

13. Procédé de constitution d'un réseau domotique, selon la revendication 12, **caractérisé en ce que** la transmission du nom de groupe (NG1; NG2) est codée selon un algorithme de cryptage.

14. Réseau auquel s'applique le procédé selon l'une des revendications 1 à 13.

## Claims

1. A method of constituting a home automation network, comprising bidirectional elements such as actuators (A1, A2, A3), control elements which are at least unidirectional (C1, C2, C3, S1), bidirectional control elements (C60, C70, C800), which consists in lastingly functionally linking up at least two elements, **characterized in that** the lasting functional linkup brings about at least one transfer from a bidirectional element to another bidirectional element of at least one information structuring the network and creating a hierarchical relationship between these two elements.

2. The method of constituting a home automation network, as claimed in claim 1, **characterized in that** the information creating a hierarchical relationship between these two elements comprises a group name (NG1; NG2).

3. The method of constituting a home automation network, as claimed in claim 2, **characterized in that** the transmission of the group name (NG1; NG2) is coded according to an encryption algorithm.

4. The method of constituting a home automation network, as claimed in claim 1, **characterized in that** the information creating a hierarchical relationship between these two elements comprises the identity of the links already established with the element sending the information.

5. The method of constituting a home automation network, as claimed in any one of the preceding claims, **characterized in that** the lasting functional linkup between two bidirectional elements is achieved under the supervision of a third element which is itself previously authenticated at one of the elements during a learning operation.

6. The method of constituting a home automation network, as claimed in any one of the preceding claims, **characterized in that** the functional linking up of a bidirectional control element (C60) with a bidirectional element (A1, A2, A3) is performed under the supervision of an at least unidirectional control element (C1, C2, C3).

7. The method of constituting a home automation network, as claimed in any one of the preceding claims, **characterized in that** the functional linking up of an at least unidirectional control element (C1, C2, C3, S1) with a bidirectional element (A1, A2, A3) is performed under the supervision of a bidirectional control element (C60).

8. The method of constituting a home automation network, as claimed in any one of the preceding claims, **characterized in that** the functional linking up of two bidirectional control elements (C60, C70) of the same hierarchical level is ensured by the linking up of each of the bidirectional control elements with a control element of higher hierarchical level (C800).

9. The method of constituting a home automation network, as claimed in any one of the preceding claims, **characterized in that** the functional linking up of two bidirectional elements (A1, A2, A3) is ensured by the successive functional linking up of each of them with one and the same bidirectional control element (C60).

10. The method of constituting a home automation network, as claimed in any one of the preceding claims, **characterized in that**, during a functional linking up of a bidirectional control element (C60, C70 or C800) with another element, the latter communicates to said bidirectional control element the set of identifiers relating to the elements, with which it is already linked up.

11. The method of constituting a home automation network, as claimed in any one of the preceding claims, **characterized in that**, during a functional linking up between two control elements of different hierarchical level, the transmission of information regarding the preestablished relationships takes place from the element of lower level to the element of higher level.

12. The method of constituting a home automation network, as claimed in any one of the preceding claims, **characterized in that**, during a functional linking up of a bidirectional control element (C60, C70, or C800) with another element, there is exchanged a group name NG becoming common to all the elements of lower level, linked up with said bidirectional control element.

13. The method of constituting a home automation network, as claimed in claim 12, **characterized in that** the transmission of the group name (NG1; NG2) is coded according to an encryption algorithm.

14. A network to which the method according to one of claims 1 to 13 is applied.

## Patentansprüche

1. Verfahren zur Bildung eines domotischen Netzwerks, das bidirektionale Elemente wie Aktuatoren (A1, A2, A3), mindestens eindirektionale Steuermittel (C1, C2, C3, S1), bidirektionale Steuerelemente (C60, C70, C800) umfasst, das darin besteht, mindestens zwei Elemente in dauerhafte funktionelle Beziehung zu versetzen, **dadurch gekennzeichnet, dass** das Versetzen in dauerhafte funktionelle Beziehung mindestens einen Transfer mindestens einer netzstrukturierenden Information von einem bidirektionalen Element zu einem anderen bidirektionalen Element bewirkt und eine hierarchische Beziehung zwischen diesen beiden Elementen schafft.

2. Verfahren zur Bildung eines domotischen Netzwerks nach Anspruch 1, **dadurch gekennzeichnet, dass** die Information, die eine hierarchische Beziehung zwischen diesen beiden Elementen schafft, einen Gruppennamen (NG1; NG2) umfasst.

3. Verfahren zur Bildung eines domotischen Netzwerks nach Anspruch 2, **dadurch gekennzeichnet, dass** die Übertragung des Gruppennamens (NG1; NG2) gemäß einem Verschlüsselungsalgorithmus codiert ist.

4. Verfahren zur Bildung eines domotischen Netzwerks nach Anspruch 1, **dadurch gekennzeichnet, dass** die Information, die eine hierarchische Beziehung zwischen diesen beiden Elementen schafft, die Identität der bereits mit dem Element, das die Information sendet, hergestellten Verbindungen umfasst.

5. Verfahren zur Bildung eines domotischen Netzwerks nach einem der vorangehenden Ansprüche, **dadurch gekennzeichnet, dass** das Versetzen in dauerhafte funktionelle Beziehung zwischen zwei bidirektionalen Elementen unter der Kontrolle eines dritten Elements erfolgt, das ebenfalls zuvor bei einer Lernmaßnahme von einem der Elemente authentifiziert wurde.

6. Verfahren zur Bildung eines domotischen Netzwerks nach einem der vorangehenden Ansprüche, **dadurch gekennzeichnet, dass** das Versetzen in funktionelle Beziehung eines bidirektionalen Steuerelements (C60) mit einem bidirektionalen Element (A1, A2, A3) unter der Kontrolle eines mindestens eindirektionalen Steuerelements (C1, C2, C3) erfolgt.

7. Verfahren zur Bildung eines domotischen Netzwerks nach einem der vorangehenden Ansprüche, **dadurch gekennzeichnet, dass** das Versetzen in funktionelle Beziehung eines mindestens eindirektionalen Steuerelements (C1, C2, C3, S1) mit einem bidirektionalen Element (A1, A2, A3) unter der Kontrolle eines bidirektionalen Steuerelements (C60) erfolgt.

8. Verfahren zur Bildung eines domotischen Netzwerks nach einem der vorangehenden Ansprüche, **dadurch gekennzeichnet, dass** das Versetzen in funktionelle Beziehung von zwei bidirektionalen Steuerelementen (C60, C70) derselben hierarchischen Ebene durch das Versetzen in Beziehung jedes der bidirektionalen Steuerelemente mit einem Steuerelement höherer hierarchischer Ebene (C800) gesichert ist.

9. Verfahren zur Bildung eines domotischen Netzwerks nach einem der vorangehenden Ansprüche, **dadurch gekennzeichnet, dass** das Versetzen in funktionelle Beziehung von zwei bidirektionalen Elementen (A1, A2, A3) durch das schrittweise Versetzen in funktionelle Beziehung jedes von ihnen mit einem selben bidirektionalen Steuerelement (C60) gesichert ist.

10. Verfahren zur Bildung eines domotischen Netzwerks nach einem der vorangehenden Ansprüche, **dadurch gekennzeichnet, dass** beim Versetzen in eine funktionelle Beziehung eines bidirektionalen Steuerelements (C60, C70 oder C800) mit einem anderen Element dieses dem bidirektionalen Steuerelement alle Kennwörter kommuniziert, die sich auf Elemente beziehen, mit denen es bereits in Beziehung steht.

11. Verfahren zur Bildung eines domotischen Netzwerks nach einem der vorangehenden Ansprüche, **dadurch gekennzeichnet, dass** bei einer Herstellung einer funktionellen Beziehung zwischen zwei Steuerelementen unterschiedlicher hierarchischer Ebene die Informationsübermittlung über bereits hergestellte Beziehungen vom Element unterer Ebene zum Element höherer Ebene stattfindet.

12. Verfahren zur Bildung eines domotischen Netzwerks nach einem der vorangehenden Ansprüche, **dadurch gekennzeichnet, dass** beim Versetzen in eine funktionelle Beziehung eines bidirektionalen Steuerelements (C60, C70 oder C800) mit einem anderen Element ein Gruppenname NG ausgetauscht wird, der für alle Elemente unteren Niveaus gemeinsam wird, die mit dem bidirektionalen Steuerelement in Beziehung versetzt sind.

13. Verfahren zur Bildung eines domotischen Netzwerks nach Anspruch 12, **dadurch gekennzeichnet, dass** die Übertragung des Gruppennamens (NG1; NG2) gemäß einem Verschlüsselungsalgorithmus codiert ist.

14. Netzwerk, auf das das Verfahren nach einem der Ansprüche 1 bis 13 angewendet wird.
